# EUROPEAN PATENT APPLICATION

(11) **EP 1 477 617 A2**
(43) Date of publication of application: **17.11.2004**
(21) Application number: 04076419.3
(22) Date of filing: 13.05.2004
(51) Int. Cl.: E03C 1/298, F16K 15/14

(54) **Odour seal and backflow-preventer**

(30) Priority: 14.05.2003 NL 1023417; 16.09.2003 NL 1024305
(71) Applicant: Senteur, Michel Jacques, 1383 KE Weesp (NL)
(72) Inventor: Senteur, Michel Jacques, 1383 KE Weesp (NL)
(74) Representative: Assendelft, Jacobus H.W.

(57) **Abstract**

A backflow-preventer or odour seal is made of rubber and has a flattened tube-like shape, allowing fluid flow in the one direction and preventing it in the opposite direction to provide a waterless odour trap for connection to the public sewer. This seal has a widening such that its open section is enlarged. Thus, a plug of hairs will not jam it.

## Description

Starting point of this invention is provided by, a.o., EP-A-1174549, the disclosure of which is incorporated by reference. With the seal e.g. an odor trap without a water filled bend can be provided for the drain of a toilet, urinal, sink, or else, connected to the public sewer.

The object is, o.a., one or more of the following: large flow-through capacity; avoidance of getting plugged by e.g. hairs; the possibility to fabricate the seal by injection moulding; the possibility to apply the seal in a horizontal position; long lasting; to avoid that the seal can be turned inside out by a back flow.

The seal preferably has one or more of the following features: made of silicon; a wall thickness below 1 mm, preferably below 0.6 mm, more preferably between 0.1 and 0.5 mm in the area wherein the walls in rest bear sealingly against each other; shaped such that the seal by nature has an upstream open inflow opening, preferably substantially circular, and downstream a closed outflow opening, preferably substantially gap like, wherein said outflow opening automatically opens by moving away from each other of the wall parts on both sides of the gap due to flexural deformation; a tapered, preferably bulged, transition area from the inflow opening towards the outflow opening; an active flow-through opening, preferably in the transition area, of which the dimension increases in downstream direction; a projection, preferably in the radial direction, preferably in the transition area, wherein walls are moved apart with opened uitflow opening; a gap dimension, preferably at the outflow opening, larger than a dimension of the inflow opening or a dimension of the transition area, preferably disregarding a possible projection.

If a seal, such as the in here or in EP-A-1174549 disclosed, or another seal with a by nature closed outflow opening of which at least one of the mutually bearing walls moves apart while deforming by flexure during automatically opening of the outflow opening when a liquid stream passess therethrough, such as e.g. according to EP-A-0941433, is used horizontally, it is prefered to support at least a part of the piece of the seal wherein the walls are sealingly mutually bearing and can easily move away from each other, such that if the liquid stream through the seal is absent, said piece has substantially the shape according to the upright (vertical) working position. Therefor said piece is preferably supported by a non-circular wall of e.g. a tube wherein the seal is mounted. Thus the sealing of the gap is guaranteed.

As an alternative for a seal with by nature open inflow opening, the invention is also concerned with a seal with an inflow opening that should forcibly kept open, e.g based on information in EP-A-0941433.

The invention is further exemplified by the enclosed drawing showing a non-limiting prefered embodiment in its natural, unloaded condition.
Fig. 1 shows a perspective view;
Fig. 2 and 3 show a side view according arrow II an III in fig. 3 and fig. 2, respectively;
Fig. 4 and 5 show a section along line IV and V, respectively, in fig. 2;
Fig. 6 shows a side view, partly sectional.

The seal 1 is mounted in a plastic or metal, cylindric, drain tube 2 (fig. 6) running to the public sewer and connected to a sanitary device. Liquid to be drained to the sewer flows by gravity action in the direction of arrow A (fig. 2) through the seal 1. The seal 1 prevents that in the direction opposite arrow A at least gassess and preferably also liquids pass and enter the living space. The seal can be mounted in a tub 2 that extends in a vertical, horizontal or any desired position in between. Fig. 6 shows mounting in a horizontal tube 2.

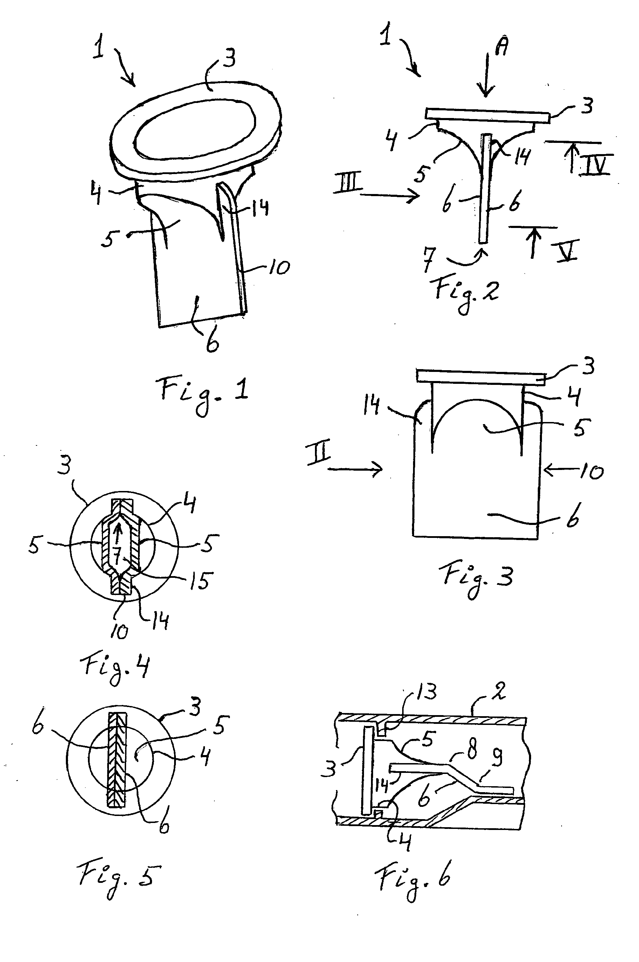

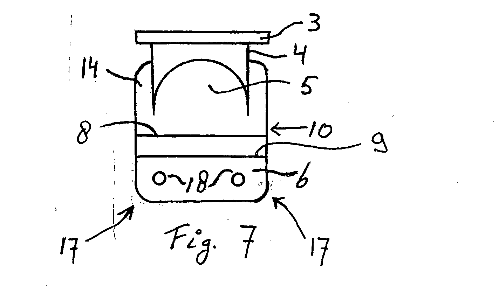

At its inflow end the seal has a radially projecting annular flange 3 for mounting purposes. In the embodiment of fig. 6 the annular flange bears at a seat 13 projecting from the inner wall of the tube 2. Perpendicular to the flange 3 a thin walled cylindrical part 4 joins, which merges in two radially opposite, toward the inner side bent, flattened, thin walled parts 5 that merge into flat, thin walled strips 6 which mutually bear over their complete lengt and width, such that between said parts 5 a flow trhough opening 15 is present (fig. 4) which gradually narrows in the direction of arrow A and merges into a closed gap 7 between de strips 6 (fig. 5). The longitudinal edges 10 of the strips 6 are mutually connected in a fluid tight manner. In the embodiment according to fig. 6 the strips 6 have buckles 8 and 9. At this point, the seal 1 corresponds to EP-A-1174549.

The strips 6 are wider than the cylindrical part 4 and thus the gap 7 is longer than the inner diameter of part 4. Also the part of the strips 6 projecting radially outside part 4 is extended in the transition area cylindrical-flat wherein the parts 5 are present. The projections 14 end at the level where part 4 merge into parts 5. The gap 7 also extends into these projections 14 (fig. 4). The enlargement of the strips 6 can extend at any desired location along the length of the seal. An embodiment is e.g. feasable wherein the projections 14 are absent along the lengt of parts 5.

Thus with this seal provisions are made for a flow through opening in the part downstream from the parts 5 which is larger than possible on the basis of the dimension of the cylindrical part 4. The seal 1 also contains a flow through opening that widens in flow direction such that a plug (e.g. of hairs) gathering and plugging in the upstream part of the seal (e.g. part 4) has less drag further down in the seal and is thus less likely to get stuck deeper in the seal, leading to plugging problems.

Fig. 6 shows the seal 1 in laying position, mounted in a horizontal tube 2. The tube 2 has a flattened part 16 to support the strips 6 such that the shape of the strips 6 and thus the gap 7 are maintained, which they have by nature when de seal 1 is vertically suspended. By the buckled shape of the strips 6 (buckles 8 and 9) the position of the flattening 16 can be distal from the centre of the tube 2, such that the seal 1 can open unobstructed to drain liquid. The flattening 16 preferably provides a support across substantially the complete width of the strips 6, e.g. such that the gap 7 keeps a substantially straight shape. This support can cover a large surface, while a pattern of local supports is also feasible.

The invention also relates to a seal obtained by combining one or more aspects of the herewith disclosed seal and one or more aspects of the seal as disclosed in EP-A-1174549 and/or one or more aspects of another seal, known as such, such as known from e.g. EP-A-0941433.

It can be advantageous for the functioning to round an edge of a strip 6 and/or to provide a strip 6 with one or more perforations. One or both these measurements are applicable to sll types of seals as meant here, such as shown in fig. 1-6 or without projections 14 or without buckels 8, 9, etc.

Fig. 7 shows a view similar to fig. 3, wherein the strips 6 are rouded on both sides at their lower ends 17 and have at two locations a perforation 18 in the lower part below the buckels 8, 9. A perforation 18 in the one strip 6 is in line with a perforation 18 in the opposite strip 6. Liquid can flow from the gap 7 between de strips 6 through the perforations 18 or the lower edge of the seal 1 (viewed in flow direction A) to exit the seal 1.

## Claims

1. Seal, particularly in a line which is connected to a urinal on the one hand and to the sewer system on the other hand, with a passageway with a passage of which at least one of the preferably sheet like boundaries is easily deformable such that said passageway has a first position wherein the passage is at least substantially fluid, particularly gas tight and a second position wherein the passage allows passage of fluid, particularly liquid and wherein preferably said passage boundary tries to keep said passage in the first position or brings it from the second in the first position by a force, such as by resilience.

2. Seal according to claim 1, wherein it has an enlargement (14) such that the passage (7) is enlarged.

3. Seal according to claim 1 or 2, wherein the enlargement (14) extends into the transition area cylindrical-flat and/or wherein the projections (14) are absent along the parts (5).

4. Seal according to claim 1, 2 or 3, with a flow through opening widening in flow through direction.

5. Seal according to claim 1, 2, 3 or 4, mounted within a laying tube (2) with a flattened part (16) to support and maintain the shape of at least part of the seal.

6. Seal according to claim 1, 2, 3, 4 or 5, with a rounded edge (17) and/or one or more perforations (18).

7. Seal according to claim 1, 2, 3, 4, 5 or 6 with one or more of the following: unitary injection moulding part of e.g. elastomere or silicon; a wall thickness smaller than 1 mm in the area wherein the walls (6) sealingly bear against each other in rest; a shape such that the seal by nature has an open inflow opening upstream and a closed outflow opening downstream; a tapered, preferably bulged, transition area from the inflow to the outflow opening.
